# Europäisches Patentamt
# European Patent Office
# Office européen des brevets

(19)

(11) Numéro de publication: **0 223 619**
**B1**

(12) # FASCICULE DE BREVET EUROPEEN

(45) Date de publication du fascicule du brevet:
**04.01.89**

(21) Numéro de dépôt: **86401872.6**

(22) Date de dépôt: **26.08.86**

(51) Int. Cl.⁴: **B01J 8/26,** B01J 8/38,
C10J 3/56, C10J 3/48, C10J 3/84

(54) **Dispositif de traitement de matières solides sous forme de particules, en lit fluidisé circuit circulant en particulier dispositif de gazéification.**

(30) Priorité: **09.09.85 FR 8513354**

(43) Date de publication de la demande:
**27.05.87 Bulletin 87/22**

(45) Mention de la délivrance du brevet:
**04.01.89 Bulletin 89/1**

(84) Etats contractants désignés:
**AT BE DE GB IT SE**

(56) Documents cités:
**FR-A- 2 489 360
FR-A- 2 556 983**

(73) Titulaire: **FRAMATOME, Tour Fiat 1 place de la Coupole,
F-92400 Courbevoie(FR)**

(72) Inventeur: **Morin, Jean-Xavier, 39 rue du Cas Rouge
Marchandon, F-45170 Neuville aux Boix(FR)**

(74) Mandataire: **Moncheny, Michel et al, c/o Cabinet
Lavoix 2 Place d'Estienne d'Orves, F-75441 Paris
Cedex 09(FR)**

ACTORUM AG

## Description

L'invention concerne un dispositif de traitement de matières solides sous forme de particules, en lit fluidisé circulant, tel qu'un dispositif de gazéification permettant de transformer des particules de matières solides telles que du bois du charbon, en un gaz combustible, sous l'effet de la chaleur produite à partir des matières solides dans le dispositif lui-même.

On connaît des dispositifs de gazéification à lit fluidisé circulant qui comportent un corps principal entièrement revêtu intérieurement de matière réfractaire, de forme allongée et disposé avec son axe vertical.

Les matières solides combustibles à gazéifier ainsi que des matières solides caloporteuses, sous forme de particules, sont introduites à la partie inférieure du corps principal et fluidisées par un gaz oxydant tel que de l'air introduit à la partie inférieure du corps principal constituant une chambre ou colonne de fluidisation. La vitesse du gaz de fluidisation est telle qu'une proportion notable des particules est entraînée jusqu'à la partie supérieure de la chambre de fluidisation dans laquelle on provoque la pyrolyse de matières combustibles et leur gazéification autothermique, à l'intérieur du lit circulant. La partie supérieure de la chambre du dispositif de gazéification est mise en communication avec la partie supérieure d'un cyclone de recirculation, par un conduit de direction sensiblement tangentielle par rapport au cyclone, si bien que le courant de gaz et de matières solides constituant le lit fluidisé circulant se met en mouvement tourbillonnaire pour constituer un vortex. La séparation des gaz et des matières solides est réalisée dans le cyclone de recirculation dont la partie supérieure est reliée par un tube séparateur à un circuit de traitement et d'utilisation du gaz formé et dont la partie inférieure est reliée par un conduit de recirculation des solides séparés à la partie inférieure de la colonne de fluidisation. La matière solide séparée des gaz est constituée par des cendres et des imbrûlés combustibles qui sont ainsi renvoyés à la partie inférieure de la colonne de fluidisation.

Il est apparu que les performances de ces dispositifs de gazéification sont limitées par le fait que la densité de suspension des solides dans le lit fluidisé reste relativement faible et que l'extraction des cendres, à la partie inférieure de la colonne de fluidisation, se fait par voie sèche.

Le fait que la densité de suspension des solides reste faible entraîne une mise en contact médiocre entre les solides et les gaz dans la zone réactionnelle du dispositif et une utilisation du volume réactionnel qui est loin d'être optimale.

L'extraction des cendres par voie sèche, à une température relativement basse, nuit au rendement de conversion du carbone dont une partie non convertie est soutirée avec les cendres.

Le but de l'invention est donc de proposer un dispositif de traitement de matières solides sous forme de particules, en lit fluidisé circulant, avec récupération de gaz produits, comportant une chambre de fluidisation allongée à axe vertical à la partie inférieure de laquelle les particules solides sont introduites et fluidisées par un courant de gaz oxydant dirigé de bas en haut, au moins un cyclone de recirculation des matières solides en communication par sa partie supérieure avec la partie supérieure de la chambre de fluidisation, un conduit de recirculation des matières solides mettant en communication la partie inférieure du cyclone de recirculation avec la partie inférieure de la chambre de fluidisation et des moyens de récupération et de traitement des gaz produits, prélevés à la partie supérieure du cyclone de recirculation, dispositif qui permette d'améliorer la mise en contact des gaz et des solides du lit fluidisé circulant, dans la zone réactionnelle.

Dans ce but, le cyclone de récupération comporte des moyens d'injection de gaz réactants à l'intérieur du courant tourbillonnaire de gaz et de particules solides qui se forme dans sa partie supérieure, pour provoquer la formation d'une zone réactionnelle pour les matières solides et les gaz en circulation, à l'intérieur du cyclone de recirculation.

Dans le cas où le dispositif de traitement est un dispositif de gazéification de matières solides contenant du carbone, la colonne de fluidisation comporte de préférence une zone élargie à sa partie inférieure en communication avec le conduit de recirculation des matières solides brûlées, munie de moyens pour maintenir localement ou dans l'ensemble de la masse la température des matières solides recyclées à un niveau supérieur à leur température de collage et de moyens de récupération des cendres agglomérées formées dans cette zone élargie.

Afin de bien faire comprendre l'invention, on va maintenant décrire, à titre d'exemple non limitatif, en se référant aux figures jointes en annexe, un dispositif de gazéification de bois sous forme de particules, conforme à l'invention.

- La figure 1 est une vue schématique en coupe de l'installation de gazéification suivant l'invention, associée à un ensemble de traitement et d'utilisation des gaz produits.
- La figure 2 est une vue en coupe d'une variante de réalisation de la partie de traitement des gaz de l'installation.

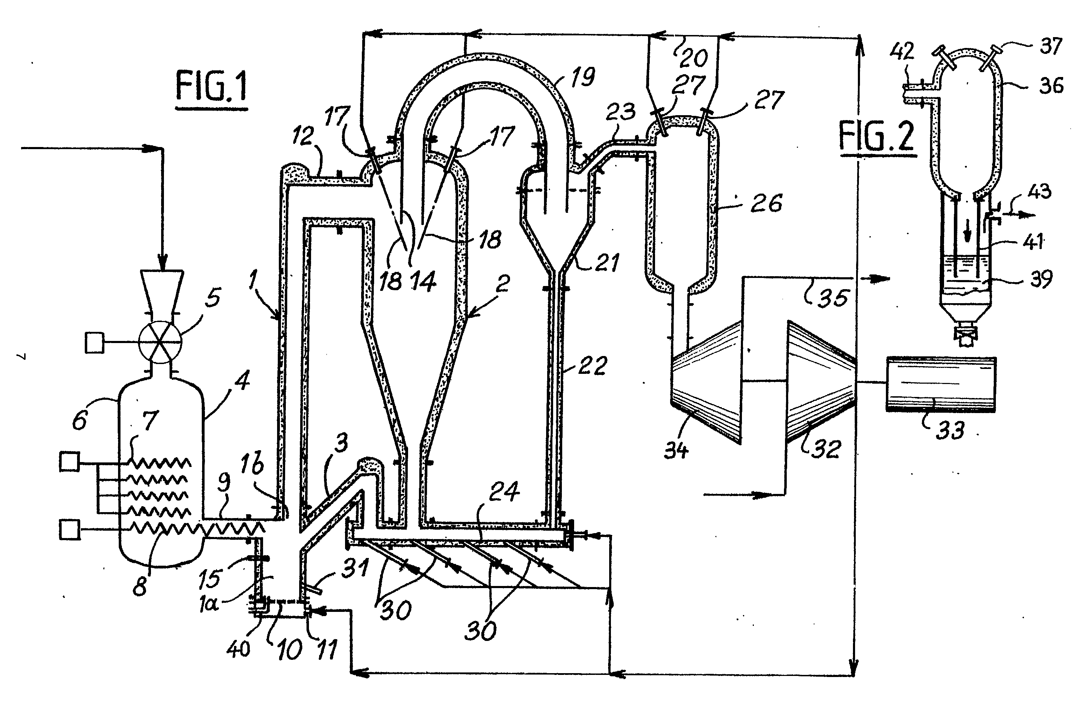

Comme il est visible sur la figure 1, l'installation comporte une colonne de fluidisation 1, un cyclone de recirculation 2 et un conduit 3 ou jambe de recirculation des matières solides, ces composants constituant le circuit principal de l'installation de gazéification dans lequel circule le lit fluidisé. L'installation comporte de plus un ensemble de composants qui seront décrits ultérieurement, permettant le traitement et l'utilisation du gaz produit dans le circuit principal de l'installation.

La colonne de fluidisation 1 comporte une zone élargie 1a à sa partie inférieure dans laquelle les particules de bois à gazéifier et de matière caloporteuse sont introduites par un dispositif d'introduction sous pression 4, l'ensemble de l'installation fonctionnant à une pression supérieure à la pression atmosphérique. Le dispositif d'introduction 4 comporte une écluse rotative 5, et une trémie-tampon 6 dans laquelle sont disposées des vis de transfert 7 et une vis d'injection 8 débouchant dans la conduite 9 d'alimentation de la colonne de fluidisation 1. Les particules de bois introduites dans la trémie 6 par l'intermédiaire de l'écluse 5 sont reprises par les vis de transfert 7 puis par la vis d'injection 8 qui permet de les introduire dans la zone 1a de la colonne de fluidisation 1 où elles sont reçues par une grille de fluidisation 10 sous laquelle une conduite 11 permet l'introduction d'air primaire de fluidisation des particules. La vitesse de cet air primaire circulant de bas en haut dans la colonne de fluidisation 1 est suffisante pour provoquer la fluidisation en lit circulant du mélange des particules de bois et des solides caloporteurs. Le mélange gaz-solide parvenant à la partie supérieure de la colonne 1 est introduit dans le cyclone de recirculation 2 par l'intermédiaire d'un conduit 12 de direction tangentielle par rapport au cyclone, si bien que le mélange gaz-solide forme un courant tourbillonnaire dans la partie supérieure du cyclone, autour du conduit de séparation 14 de ce cyclone.

Un brûleur 15 pénétrant dans la zone inférieure élargie 1a de la colonne de fluidisation 1 permet d'élever la température dans l'enceinte; l'introduction des particules de bois dans cette zone, dans laquelle il s'établit une température relativement élevée permet d'amorcer la pyrolyse des particules. La quantité d'air de fluidisation introduite par la conduite 11 est cependant insuffisante pour assurer la conversion totale en gaz des particules de bois. Ces particules de bois sont mélangées, au moment de leur introduction dans la colonne de fluidisation à une matière solide caloporteuse qui récupère une partie de la chaleur dégagée dans la colonne de fluidisation, si bien que le mélange gaz-solide parvenant à la partie supérieure du cyclone et mis en mouvement tourbillonnaire comporte à la fois des particules solides de bois partiellement converties et des particules inertes en mélange avec des gaz chauds.

La circulation dans la direction verticale descendante de ce mélange gaz-solide est fortement ralentie dans la partie supérieure du cyclone et la densité de matières solides dans les gaz est alors très élevée.

Le cyclone comporte dans sa partie supérieure trois cannes 17 permettant l'injection d'agents de gazéification dans la partie supérieure du cyclone 2 dans laquelle le temps du séjour du mélange gaz-solide et la densité de particules solides du mélange sont considérablement accrus par effet de vortex. Les cannes d'injection 17 sont disposées à 120° autour du cyclone et inclinées par rapport à l'axe vertical de ce cyclone, de façon que leurs axes 18 soient concourants en un point situé légèrement en dessous de l'entrée du conduit de séparation 14 du cyclone. L'agent de gazéification est constitué par de l'air comburant introduit sous pression dans les cannes 17 par un circuit 20 qui sera décrit plus en détail, dans la suite de la description. Au lieu d'air ordinaire, on peut utiliser comme gaz réactant de l'air enrichi en oxygène ou un mélange oxygène-vapeur d'eau pour réduire le plus possible la quantité d'azote dans les gaz produits.

L'injection d'air comburant dans les matières solides chaudes provoque la formation d'une zone réactionnelle dans la partie supérieure du cyclone où la gazéification des matières solides se produit dans de très bonnes conditions, la densité et le brassage des matières étant importants dans la zone d'injection et favorisant les contacts gaz/solides. On parvient donc à une utilisation optimale du volume réactionnel constitué par la partie supérieure du cyclone.

Les gaz formés sont récupérés par le conduit de séparation 14 et un conduit de transfert 19 vers une installation de dépoussiérage 21 communiquant à sa partie inférieure par une colonne 22 avec une chambre de récupération de matières solides 24 et à sa partie supérieure, par un conduit 23 avec une chambre 26 dans laquelle on assure la combustion du gaz récupéré grâce à des tuyères 27 d'introduction d'air comburant.

Le cyclone de recirculation 2 communique à sa partie inférieure avec la chambre de récupération de matières solides 24 constituant une partie du conduit de recirculation 3.

Les matières solides ayant une certaine granulométrie sont séparées des fumées au niveau du conduit 14 et parviennent à la partie inférieure du cyclone 2 dans la chambre 24. Ces matières solides sont constituées en grande partie de solides caloporteurs et de cendres résultant de la gazéification du bois qui renferment encore une certaine fraction de matières combustibles. Ces matières solides, de même que les matières à fine granulométrie récupérées dans l'installation de dépoussiérage 21 par le conduit vertical 22 sont fluidisées et remises en circulation dans la chambre 24 et la jambe de recirculation 3 par des tuyères d'injection d'air sous pression 30. Les matières solides sont ainsi réintroduites dans la partie élargie 1a de la colonne de fluidisation 1.

Comme indiqué plus haut, la température est maintenue dans cette partie élargie 1a à un niveau relativement élevé, grâce notamment à des cannes d'injection d'air dont une est représentée en 40; ce niveau est supérieur à la température de collage des cendres introduites par le conduit 3 dans la zone 1a. Les cendres subissent donc une agglomération dans la zone 1a et de ce fait se séparent du lit fluidisé circulant. Les particules de cendres agglomérées sont récupérées et évacuées par une conduite 31 comportant une vanne de vidange disposée à la partie inférieure de la colonne.

Il faut noter que les cannes d'injection 40 peuvent être réparties sur tout ou partie de la grille afin de permettre à volonté le maintien local ou dans l'ensemble de la masse du lit fluidisé de la température d'agglomération.

Les composants dans lesquels circulent les gaz ou particules chaudes sont entièrement revêtus intérieurement de matière réfractaire et le refroidissement des gaz le cas échéant s'effectue entièrement à l'extérieur de la boucle de gazéification constituée par la colonne 1, le cyclone 2 et le conduit 3.

Les gaz brûlés dans la chambre de combustion 26 permettent l'entraînement d'une turbine de détente 34 couplée à un compresseur d'air 32 et à un générateur asynchrone 33. Le compresseur d'air 32 alimente le circuit d'air 20 permettant la distribution d'air sous pression dans toute l'installation.

Les fumées récupérées à la turbine 34 sont évacuées par une conduite 35 reliée à une installation de séchage des particules de bois avant leur introduction dans l'écluse 5. Cette installation de séchage utilise la chaleur contenue dans les fumées évacuées par la conduite 35.

L'installation qui a été décrite se caractérise par une utilisation optimale de la zone réactionnelle située, selon l'invention, dans la partie supérieure du cyclone de recirculation 2. De ce fait, la structure de l'installation peut être simplifiée et sa dimension réduite à capacité identique. La structure de l'installation comportant un seul corps principal de cyclone permet de réaliser facilement la mise en pression des gaz à l'intérieur de cette installation. Un très bon contrôle de la zone réactionnelle permet également d'assurer un fonctionnement où les réactions de gazéification se produisent dans des conditions pratiquement stœchiométriques.

L'inclinaison des tuyères d'injection d'agents de gazéification permet d'éloigner le centre de la zone réactionnelle des parois du cyclone 2, donc de limiter la température et d'éviter les collages des particules sur ces parois.

L'extraction des cendres à l'état agglomérant permet de limiter l'extraction de carbone non converti avec les cendres dans le cas de combustibles peu réactifs.

Sur la Fig. 2, on voit une variante de réalisation de la partie de l'installation dans laquelle on effectue le traitement des gaz produits; ces gaz sont récupérés à la partie supérieure du cyclone de recirculation 2 et introduits dans une chambre de post-gazéification 36 par une conduite 42 reliée au cyclone de recirculation (non représenté sur la figure 2). Des tuyères 37 permettent d'introduire de l'oxygène en quantité réglée dans la chambre 36 pour produire par combustion d'une partie des gaz un dégagement de chaleur suffisant pour porter l'ensemble de la masse gazeuse à une température supérieure à 1300°C. Cette température permet de convertir l'ensemble des composés hydrocarburés contenus dans les gaz en un mélange $CO + H_2$. Les gaz ayant subi la conversion sont ensuite envoyés, par l'intermédiaire d'une conduite verticale 41 dans un bac rempli d'eau 39 et refroidis par barbotage avant leur sortie du dispositif par une conduite 43. On effectue ainsi un reformage du gaz produit avant son utilisation.

Il est bien évident que l'invention ne se limite pas au mode de réalisation qui a été décrit.

C'est ainsi que les composants de la boucle principale de gazéification et du circuit de traitement et d'utilisation des gaz produits peuvent être différents des composants qui ont été décrits. L'injection d'agents de gazéification dans le cyclone de recirculation peut être réalisée par d'autres moyens que les cannes ou tuyères qui ont été décrites.

Enfin, le dispositif suivant l'invention peut être utilisé pour la gazéification d'autres matières que les particules de bois, par exemple pour la gazéification de particules de charbon. Un tel dispositif pourrait être également utilisé pour d'autres traitements de matières solides par des gaz, les gaz réactants étant introduits dans la zone tourbillonnaire créée par le cyclone de recirculation.

## Revendications

1. Dispositif de traitement thermique de matières solides sous forme de particules, en lit fluidisé circulant, avec récupération de gaz produits comportant une chambre de fluidisation (1) allongée à axe vertical à la partie inférieure de laquelle les particules solides sont introduites et fluidisées par un courant de gaz oxydant dirigé de bas en haut, au moins un cyclone de recirculation (2) des matières solides en communication par sa partie supérieure avec la partie supérieure de la chambre de fluidisation (1), un conduit de recirculation (3) des matières solides mettant en communication la partie inférieure du cyclone de recirculation (2) avec la partie inférieure de la chambre de fluidisation (1) et des moyens de récupération et de traitement des gaz produits, prélevés à la partie supérieure du cyclone de recirculation (2), caractérisé par le fait que le cyclone de recirculation (2) comporte des moyens d'injection (17) de gaz réactants à l'intérieur du courant tourbillonnaire de gaz et de particules solides qui se forme dans sa partie supérieure, pour provoquer la formation d'une zone réactionnelle pour les matières solides et les gaz en circulation, à l'intérieur du cyclone de recirculation (2).

2. Dispositif de traitement suivant la revendication 1 utilisé pour la gazéification de matières solides contenant du carbone, caractérisé par le fait que la colonne de fluidisation (1) comporte une zone élargie (1a) à sa partie inférieure en communication avec le conduit de recirculation (3) des matières solides brûlées, munie de moyens (15 et 40) pour maintenir localement ou dans l'ensemble de la masse la température des matières solides recyclées à un niveau supérieur à leur température de collage et de moyens de récupération (31) des cendres agglomérées formées dans cette zone élargie (1a).

3. Dispositif de traitement suivant l'une quelconque des revendications 1 et 2, caractérisé par le fait que le cyclone de recirculation (2) de forme cylindro-tronconique à axe vertical comporte des moyens d'injection de gaz réactants (17) constitués par une pluralité de cannes (17) ayant des axes (18) inclinés par rapport à la verticale et concourant en un point situé à l'intérieur du cyclone et sur son axe vertical.

4. Dispositif de traitement suivant la revendication 3, caractérisé par le fait que trois cannes (17) sont disposées à 120° les unes par rapport aux autres autour de l'axe du cyclone de recirculation.

5. Dispositif de traitement suivant la revendication 2, caractérisé par le fait qu'il comporte de plus un dispositif de dépoussiérage (21) et une chambre de combustion (26) des gaz formés.

6. Dispositif de traitement suivant la revendication 2, caractérisé par le fait qu'il comporte de plus un dispositif de post-gazéification (36) des gaz formés permettant le reformage en $CO + H_2$ de ces gaz avant leur utilisation.

7. Dispositif de traitement suivant l'une quelconque des revendications 1 à 6, caractérisé par le fait qu'il comporte des moyens pour maintenir la pression du gaz en circulation à un niveau supérieur à la pression atmosphérique.

## Patentansprüche

1. Vorrichtung zur Wärmebehandlung von Feststoffen in Form von Partikeln im zirkulierenden Wirbelbett, mit Wiedergewinnung von erzeugten Gasen, mit einer langgestreckten Wirbelkammer (1) mit vertikaler Achse, an deren unterem Bereich die Feststoffpartikel eingeführt und durch einen oxydierenden Gasstrom verwirbelt werden, der von unten nach oben gerichtet ist, mit wenigstens einem Rezirkulationszyklon (2) der Feststoffe, der mit seinem oberen Bereich in Verbindung mit dem oberen Bereich der Wirbelkammer (1) steht, mit einer Rezirkulationsleitung (3) der Feststoffe, die den unteren Bereich des Rezirkulationszyklons (2) mit dem unteren Bereich der Wirbelkammer (1) in Verbindung setzt, und mit Wiedergewinnungs- und Behandlungseinrichtungen der erzeugten Gase, die im oberen Bereich des Rezirkulationszyklons (2) entnommen werden, dadurch gekennzeichnet, daß der Rezirkulationszyklon (2) Einblaseinrichtungen (17) von reagierenden Gasen in das Innere des Wirbelstromes aus Gas und Feststoffpartikeln aufweist, der sich in seinem oberen Bereich ausbildet, um die Bildung einer Reaktionszone für die Feststoffe und die Gase in Zirkulation im Inneren des Rezirkulationszyklons (2) hervorzurufen.

2. Behandlungsvorrichtung nach Anspruch 1, die für die Vergasung von Kohlenstoff aufweisenden Feststoffen verwendet wird, dadurch gekennzeichnet, daß die Wirbelkolonne (1) eine vergrößerte Zone (1a) in ihrem unteren Bereich in Verbindung mit der Rezirkulationsleitung (3) der verbrannten Feststoffe aufweist, die mit Einrichtungen (15 und 40) versehen ist, um lokal oder in der gesamten Masse die Temperatur der rezirkulierten Feststoffe auf ein Niveau oberhalb ihrer Anhafttemperatur zu halten und mit Wiedergewinnungseinrichtungen (31) der angesammelten Aschen versehen ist, die in der vergrößerten Zone (1a) gebildet werden.

3. Behandlungsvorrichtung nach Anspruch 1 oder 2, dadurch gekennzeichnet, daß der Rezirkulationszyklon (2) von Zylinderstumpfform mit vertikaler Achse Einblaseinrichtungen (17) von reagierenden Gasen aufweist, die von einer Mehrzahl von Rohren bzw. Rohrstutzen (17) gebildet sind, die Achsen (18) aufweisen, die gegenüber der Vertikalen geneigt sind und sich in einem Punkt schneiden, der sich im Inneren des Zyklons und auf seiner vertikalen Achse befindet.

4. Behandlungsvorrichtung nach Anspruch 3, dadurch gekennzeichnet, daß drei Rohrstutzen (17) um 120° versetzt zueinander um die Rezirkulationszyklonachse angeordnet sind.

5. Behandlungsvorrichtung nach Anspruch 2, dadurch gekennzeichnet, daß sie darüber hinaus eine Entstaubungsvorrichtung (21) und eine Brennkammer (26) der gebildeten Gase aufweist.

6. Behandlungsvorrichtung nach Anspruch 2, dadurch gekennzeichnet, daß sie weiterhin eine Nachvergasungsvorrichtung (36) der gebildeten Gase aufweist, die die Wiederbildung dieser Gase in CO + H₂ vor ihrer Verwendung erlaubt.

7. Behandlungsvorrichtung nach einem der vorhergehenden Ansprüche 1 bis 6, dadurch gekennzeichnet, daß sie Einrichtungen zum Aufrechterhalten des Druckes der sich in Zirkulation befindlichen Gase auf einem Niveau höher als der Umgebungsdruck aufweist.

## Claims

1. A device for the thermal treatment of solid particulate substances in a circulating fluidized bed with recovery of product gases, comprising an elongate fluidization chamber (1) of vertical axis into whose lower portion the solid particles are introduced and fluidized by an upwardly directed oxidizing gas flow; at least one recirculation cyclone (2) for the solid materials which communicates via its upper portion with the upper portion of the fluidization chamber (1); a duct (3) for recirculating the solid materials via which the lower portion of the recirculation cyclone (2) communicates with the lower portion of the fluidization chamber (1); and means for the recovery and treatment of the product gases taken from the upper portion of the recirculation cyclone (2), characterized in that the recirculation cyclone (2) comprises means (17) for injecting reagent gases into the turbulent flow of gases and solid particles which is formed in its upper portion, to form a reaction zone for the circulating solid materials and gases inside the recirculation cyclone (2).

2. A treatment device according to claim 1, used for the gasification of carbon-containing solid materials, characterized in that the fluidization column (1) comprises in its lower portion a widened zone (1a) communicating with the recirculation duct (3) for the burnt solid materials and having means (15 and 40) for maintaining locally or in the whole of the mass the temperature of the recycled solid materials at a level higher than their adhesion temperature and means (31) for recovering agglomerated ash formed in such widened zone (1a).

3. A treatment device according to one of claims 1 and 2, characterized in that the cylindrical-frusto-conical recirculation cyclone (2) of vertical axis comprises means (17) for injecting reagent gases formed by a plurality of blowpipes (17) having axes (18) which are inclined to the vertical and converge at a point lying within the cyclone and on its vertical axis.

4. A treatment device according to claim 3, characterized in that three blowpipes (17) are disposed at 120° in relation to one another around the axis of the recirculation cyclone.

5. A treatment device according to claim 2, characterized in that it also comprises a dust-removing device (21) and a combustion chamber (26) for the gases formed.

6. A treatment device according to claim 2, characterized in that it also comprises a device (36) for the post-gasification of the gases formed, enabling these gases to be reformed into $CO + H_2$ before being used.

7. A treatment device according to any of claims 1 to 6, characterized in that it comprises means for maintaining the pressure of the circulating gases at a level higher than atmospheric pressure.

FIG.1

FIG.2